# EUROPEAN PATENT APPLICATION

(11) **EP 3 159 808 A1**
(43) Date of publication of application: **26.04.2017**
(21) Application number: 14895018.1
(22) Date of filing: 23.10.2014
(51) Int. Cl.: G06F 17/30

(54) **ADDRESS BOOK BASED PICTURE MATCHING METHOD AND TERMINAL**

(30) Priority: 19.06.2014 CN 201410274286
(71) Applicant: ZTE Corporation, Shenzhen, Guangdong 518057 (CN)
(72) Inventor: QIAO, Hui, Shenzhen Guangdong 518057 (CN)
(74) Representative: Winter, Brandl, Fürniss, Hübner, Röss, Kaiser, Polte - Partnerschaft mbB
(86) International application number: PCT/CN2014/089364
(87) International publication number: WO 2015/192575

(57) **Abstract**

Provided are an address book based picture matching method and terminal. The method includes: selecting or newly establishing a contact and establishing a picture index table for the contact; acquiring a portrait recognition parameter of the contact; and selecting pictures from a picture database sequentially, extracting all portrait recognition data from the selected picture, comparing the portrait recognition parameter with the all portrait recognition data of the selected picture one by one, and when any of the all portrait recognition data matches the portrait recognition parameter, adding picture information of the selected picture to the picture index table. In this way, the user can view all the pictures of the contact quickly according to the picture index table when viewing the pictures of the certain contact, and the operation is simple.

## Description

### TECHNICAL FIELD

The present invention relates to a field of picture search application, and in particular, to a method for matching a picture based on an address book and a terminal.

### BACKGROUND

Pictures are generally stored in different folders according to different shooting time. For example, a terminal automatically establishes folders named as January 2014, February 2014, etc. respectively, and stores the pictures to the corresponding folders according to the shooting time of the pictures, so that the user can view the pictures according to the shooting time, however, there are some problems. If a user wants to view the pictures of a certain contact shot in different time, the user has to browse multiple folders, and will see all pictures wanted to see after viewing most of the pictures. The operation is complicated and a waste of time. When the pictures that the user needs to view are too many, that kind of searching technology will greatly reduce the user experience. Therefore, how to provide a picture matching technology to reduce the complexity of the user operation is a technical problem to be solved urgently by those skilled in the art.

### SUMMARY

Embodiments of the present invention provide a method for matching a picture based on an address book and a terminal, to at least solve the problem of the existing complex operation of searching for the pictures.

The present invention provides a method for matching pictures based on the address book, in an embodiment, the method includes: selecting or newly establishing a contact and establishing a picture index table for the contact; acquiring a portrait recognition parameter of the contact; and selecting pictures from a picture database sequentially, extracting all portrait recognition data from the selected picture, comparing the portrait recognition parameter with the all portrait recognition data of the selected picture one by one, and when any of the all portrait recognition data matches the portrait recognition parameter, adding picture information of the selected picture to the picture index table.

The step of acquiring the portrait recognition parameter of the contact in the above embodiment includes: setting a quantity threshold of the portrait recognition data, selecting the picture according to a user operation, extracting the all portrait recognition data from the selected picture, and selecting one portrait recognition datum as the portrait recognition parameter according to the user operation when a quantity of the all extracted portrait recognition data is less than the quantity threshold of the portrait recognition data; or, receiving portrait recognition data transmitted by another terminal, and regarding the received portrait recognition data as the portrait recognition parameter.

The above embodiment further includes: extracting all portrait recognition data from a new picture when the new picture is added to the picture database; comparing portrait recognition parameter of each contact with the all the portrait recognition data of the new picture one by one; and when any of the all portrait recognition data of the new picture matches the portrait recognition parameter, determining all portrait recognition parameters matching the portrait recognition data, and adding picture information of the new picture to picture index tables of contacts corresponding to the all portrait recognition parameters.

The above embodiment further includes: when the all the portrait recognition data of the new picture do not match the portrait recognition parameter, prompting to establish a new contact; establishing a picture index table for the new contact, and selecting one of the all portrait recognition data of the new picture according to the user operation as a portrait recognition parameter of the new contact; selecting pictures from the picture database sequentially and extracting all portrait recognition data from the selected picture; and comparing the portrait recognition parameter of the new contact with the all portrait recognition data one by one, and when any of the all portrait recognition data matches the portrait recognition parameter, adding picture information of the selected picture to the picture index table of the new contact.

The above embodiment, further includes the following steps before prompting to establish a new contact, setting a reminder quantity threshold; judging whether a data quantity of all portrait recognition data in the new picture is greater than the reminder quantity threshold; and prompting to establish the new contact when the data quantity of all portrait recognition data of the new picture is less than the reminder quantity threshold.

The above embodiment further includes the following steps after adding picture information of the selected picture to the picture index table, adding contact information of the contact to the selected picture.

The above embodiment further comprises: when a picture in the picture database is deleted or moved, updating the picture information of the picture, which is deleted or moved, in a picture index table of a corresponding contact according to the contact information of the picture which is deleted or moved.

The step of acquiring the portrait recognition data from the picture in the above embodiment includes: conducting portrait recognition on the picture, extracting facial feature data from a part of a corresponding recognized face, and regarding the facial feature data as the portrait recognition data.

In order to use the present invention in the real life, the present invention further provides a terminal. In an embodiment, the terminal includes: a picture index table establishing module, configured to select or newly establish a contact, and establish a picture index table for the contact; a portrait recognition parameter acquiring module, configured to acquire a portrait recognition parameter of the contact; and a picture processing and matching module, configured to select pictures from a picture database sequentially, extract all portrait recognition data from the selected picture, compare the portrait recognition parameter with all portrait recognition data one by one, and when any of the all portrait recognition data matches the portrait recognition parameter, add picture information of the selected picture to the picture index table.

The beneficial effect of the present invention is as follows. In the method for matching pictures and terminal provided by embodiments of the present invention, the terminal acquires the portrait recognition parameter of a certain contact and establishes a picture index table for the contact according to the user operation, that is, the terminal establishes a correlation between the portrait recognition parameter and the picture index table. And then the portrait recognition parameter of the contact is utilized to compare with the portrait recognition data of each picture in the picture database one by one, and the picture information (for example, the information through which the picture can be found, such as, a storage location, a name, etc.) of the picture, in which the portrait recognition data match the portrait recognition parameter (all these pictures are clearly related to the contact information) is added to the picture index table. Thus, the user does not need to view every picture in the picture database and can quickly find all the pictures corresponding to the certain contact according to the picture index table when he or she wants to view pictures of that contact. Operation of the method is simple, the existing problem of the multifarious operation of searching for the pictures is thus solved, and the user experience is enhanced.

### BRIEF DESCRIPTION OF THE DRAWINGS

FIG. 1 is a flow chart of a method for matching pictures provided by a first embodiment of the present invention.
FIG. 2 a schematic diagram of functional modules of a terminal provided by a second embodiment of the present invention.
FIG. 3 a schematic diagram of functional modules of a terminal provided by a third embodiment of the present invention.
FIG. 4 is a flow chart of a method for matching pictures provided by a fourth embodiment of the present invention.

### DETAILED DESCRIPTION

The present invention is further explained by combining specific embodiments with the accompanying drawings.

Embodiment of the present invention is to establish the correlation between the portrait recognition parameter of the contact and the picture index table of the contact, use some recognition technologies (such as facial recognition technology) to compare with the picture database of the terminal, and add the pictures containing the same portrait recognition parameter (that is, these pictures are the pictures containing the same contact) to the picture index table of the corresponding contact, so that the user can quickly search for all the pictures corresponding to a certain contact according to the picture index table when he or she wants to view all pictures of the certain contact.

### Embodiment 1

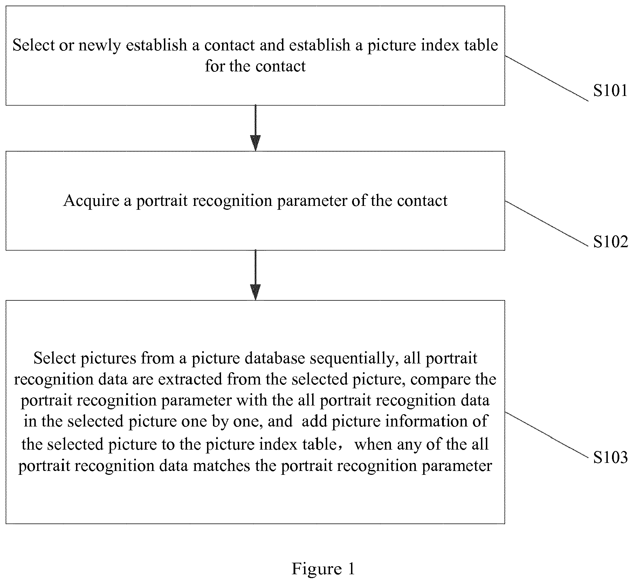

FIG. 1 is a flow chart of a method for matching pictures provided by Embodiment 1 of the present invention. As shown in FIG. 1, in the present embodiment, the method for matching pictures based on the address book provided by the present invention includes the following steps.

In S101, a contact is selected or newly established and a picture index table for the contact is established.

A terminal selects or newly establishes one or more contacts according to the user operation, and establishes a corresponding picture index table for each contact respectively, where the picture index table is configured to index the pictures associated with the contact.

In S102, a portrait recognition parameter of the contact is acquired.

The portrait recognition parameter is the portrait recognition parameter of the contact acquired by processing the pictures selected for each contact by the user. And the portrait recognition parameter includes all parameters used for distinguishing different persons, which may be the feature parameter which can be used to identify different persons, such as, a facial feature, a relative position of two pupils and the tip of the nose, pupil color, a ratio of the head and shoulder width, etc.

In some embodiments, the portrait recognition parameter of the contact is acquired by the terminal processing the picture selected by the user, which specifically includes the following.

A quantity threshold of the portrait recognition data is set, a picture is selected according to a user operation, all portrait recognition data are extracted from the selected picture, and one portrait recognition datum is selected as the portrait recognition parameter according to the user operation when a quantity of the portrait recognition data is less than the quantity threshold of the portrait recognition data.

Specifically, the quantity threshold of the portrait recognition data is set as three, and the all portrait recognition data provided by the terminal are extracted under the recognition conditions. For example, there is one main person in the picture of a certain contact selected by the user, while there may be many pedestrians in the street as the background of the picture. For the subsequent comparing with the portrait recognition parameter, there will be some recognition conditions for the portrait recognition parameter (the face must be able to be clearly recognized, etc.). Thus, the quantity of the portrait recognition data actually extracted by the terminal is only one, so that the extracted portrait recognition data can be regarded as the portrait recognition parameter of the contract. Correspondingly, when two portrait recognition data are extracted, the portrait recognition data specified by the user is selected as the picture recognition parameter of the contact according to the user operation.

In some embodiments, the portrait recognition parameter of the contact is acquired by the terminal from another terminal according to the user operation.

Specifically, the terminal receives portrait recognition data transmitted by another terminal, and regards the received portrait recognition data from another terminal as the portrait recognition parameter. For example, the user wants to specify a picture for a contact, while other users or terminal devices have allocated the portrait recognition parameter for the contact, then the user or terminal can communicate with the other users or terminals, to acquire the portrait recognition data of the contact, and regards the portrait recognition data as the portrait recognition parameter of the contact.

In S103, pictures are selected from a picture database sequentially, all portrait recognition data are extracted from the selected picture, the portrait recognition parameter is compared with the all portrait recognition data of the selected picture one by one, and when any of the all portrait recognition data matches the portrait recognition parameter, then picture information of the selected picture is added to the picture index table.

Specifically, the terminal selects the pictures from the picture database sequentially, and performs the following process for each selected picture.

All portrait recognition data of the selected picture are extracted; when the quantity of the portrait recognition data is 1, comparing the portrait recognition data with the portrait recognition parameter of a certain contact; when the portrait recognition data matches the portrait recognition parameter of the certain contact, it is believed that the picture is the picture of the contact; when the quantity of the portrait recognition data are two or more, comparing each of the portrait recognition data with the portrait recognition parameter of the certain contact; as long as one of the portrait recognition data matches the portrait recognition parameter, it is believed that the picture is the picture of the contact; when it is believed that a certain picture is the picture of the contact, the picture information (the information which can make the terminal find the picture, such as a name, a placing, storage location, etc.) of the picture is added to the picture index table of the corresponding contact.

In some embodiments, when comparing portrait recognition data of a certain picture with a portrait recognition parameter of a certain contact, the matching threshold can be set according to the picture resolution (for example, the matching threshold is set to 95% when the picture resolution is very high; and the matching threshold is set to 85% when the picture resolution is lower). Thus, as long as a matching degree or similarity between the portrait recognition data and the portrait recognition parameter is greater than the matching threshold, it is believed that the portrait recognition data and the portrait recognition parameter are matched. In addition, in some embodiments, it is just believed that the portrait recognition data and the portrait recognition parameter are matched only when the portrait recognition data and the portrait recognition parameter are exactly matched or the same.

In some embodiments, when multiple portrait recognition data are extracted from a certain picture, and two or more portrait recognition data of the all portrait recognition data respectively match different portrait recognition parameters, the picture information of the picture is respectively added to the picture index tables of the contacts corresponding to the all portrait recognition parameters matching the portrait recognition data.

The present embodiments provide a method on how to find the pictures in the picture database of the terminal, which is convenient for the user. When the user wants to view the pictures of a certain contact, all pictures of the contact can be found according to the picture index table, the user may search for or download the pictures with the corresponding names at the corresponding placing or storage locations according to the picture information, then the pictures are shown to the user.

In some embodiments, the picture matching method as shown in FIG. 1 further includes the followings.

All portrait recognition data are extracted from a new picture when the new picture is added to the picture database.

Portrait recognition parameter of each contact is compared with the all portrait recognition data of the new picture sequentially.

All portrait recognition parameters matching any of the all portrait recognition data are determined and picture information of the new picture are added to the picture index table of the contact associated with each of the all matching portrait recognition parameters.

The present embodiments provide a specific scheme on how to process the new picture. When no valid portrait recognition data can be extracted from the new picture, it is believed that the new picture is a scenic picture, invalid picture, etc., and the new picture will not be processed. When the valid portrait recognition data (the quantity of which is one or more) are extracted, the valid portrait recognition data are compared with the portrait recognition parameter of each contact one by one. Thus, it can be achieved to respectively compared all portrait recognition data in the new picture with the portrait recognition parameter, and avoid the situation that the new picture is not added to the picture index tables of all contacts shown in the picture.

In some embodiments, the method for matching picture provided further includes the followings.

When all portrait recognition data of the new picture do not match the portrait recognition parameter, it is prompted to establish a new contact. When all portrait recognition data in the new picture do not match the portrait recognition parameter, the person in the new picture may be a contact that is not pre-stored or not associated contact by the user, and the user can be reminded to newly establish or associate the contact. Of course, when the new picture is a picture freely shot by the user, such as, street shooting etc., the user may also select not to newly establish the contract for the picture.

A picture index table is established for the new contact, and one of the all portrait recognition data of the new picture is selected according to the user operation as a portrait recognition parameter of the new contact, this step is similar to S101 and S102, and will not be described in detail.

Pictures are selected from the picture database sequentially and all portrait recognition data are extracted from the pictures selected from the picture database; and the portrait recognition parameter of the new contact is compared with all portrait recognition data one by one. When any of the all portrait recognition data matches the portrait recognition parameter, picture information of the selected pictures is added to the picture index table of the new contact. This step is similar to S103, and will not be described in detail.

In some embodiments, before prompting to newly establish the contract, the method for matching pictures further includes the followings.

A reminder quantity threshold is set, and the reminder quantity threshold may be set according to the resolution of the new picture by the terminal itself and also may be set by the user.

It is judged whether the quantity of the all portrait recognition data in the new picture is greater than the reminder quantity threshold.

When the data quantity of the all portrait recognition is less than the reminder quantity threshold, it is prompted to establish the new contact; and when the data quantity of the all portrait recognition is greater than or equal to the reminder quantity threshold, it is not prompted to establish the new contact.

In the present embodiment, to set the reminder quantity threshold is to avoid that the terminal acquires the portrait recognition parameters that do not meet the recognition condition according to the pictures. This kind of portrait recognition parameters cannot be utilized to determine the people uniquely, and may result in incorrect matching of pictures, and affect the user experience.

In some embodiments, after adding the picture information of the selected picture to the picture index table, the method for matching pictures further includes adding contact information of the contact to the selected pictures. Specifically, after the picture information of the picture 1 of the contact A is added to the picture index table A, the contact information (which may be any information used to identify the contact, such as, a contact name, a phone number, etc.) of the contact is added to the picture 1. Through the implementation of the present embodiment, when the user clicks a certain picture or inputs information of a certain contact in the picture database, the terminal can quickly display all pictures associated with the picture clicked or the contact information input by the user through the contact information within the pictures to the user, and the user does not need to view one by one.

In some embodiments, the method for matching pictures provided by the above embodiments further includes: when a picture in the picture database is deleted or moved, updating the picture information of the picture, which is deleted or moved, into the picture index table of a corresponding contact according to the contact information of the deleted or moved picture. The embodiment realizes dynamically updating the picture index tables of each contact, ensures the picture index tables corresponding to each contact be up-to-date and effective, so that the terminal can completely display all pictures related to a certain contact for the user when the user select the contact.

In some embodiments, the step of acquiring the portrait recognition data from the picture in the above embodiment includes: conducting face recognition to the picture, extracting facial feature data from a part of a corresponding recognition face, and regarding the facial feature data as the portrait recognition data. Specifically, the facial feature data may be the feature parameters which can identify different faces, such as, features of eyes, eyebrows, mouth, nose, face and forehead, the relative position, etc. Accordingly, when the facial feature data extracted from the part of the corresponding recognition face are multiple (that is, there are multiple faces in the picture), each of the facial feature data is individually regarded as a portrait recognition datum.

### Embodiment 2

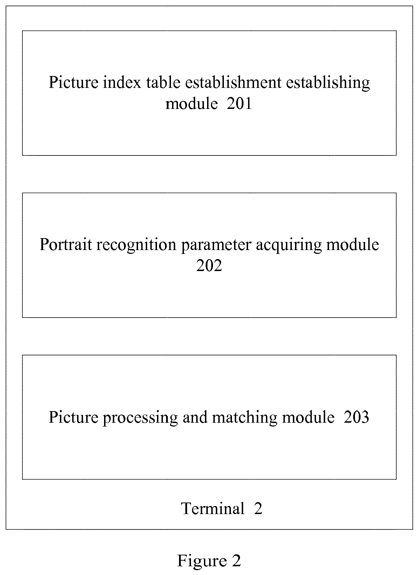

FIG. 2 is a schematic diagram of functional modules of a terminal provided by Embodiment 2 of the present invention. As shown in FIG. 2, in the present embodiment, the terminal 2 provided by the present invention includes the following functional modules.

A picture index table establishing module 201, configured to select or newly establish a contact, and establish a picture index table for the contact.

A portrait recognition parameter acquiring module 202, configured to acquire a portrait recognition parameter of the contact.

A picture processing and matching module 203, configured to select pictures from a picture database sequentially, extract all portrait recognition data from the selected pictures from the picture database, compare the portrait recognition parameter with the all portrait recognition data of the selected picture one by one, and when any of the all portrait recognition data matches the portrait recognition parameter, add picture information of the selected pictures to the picture index table.

In some embodiments, the portrait recognition parameter acquiring module 202 in the embodiment shown in FIG. 2 further includes the following modules.

A first acquiring sub-module, configured to set a quantity threshold of the portrait recognition data, select the picture according to a user operation, extract the all portrait recognition data of the selected picture, and select one portrait recognition datum as the portrait recognition parameter according to the user operation when a quantity of all extracted portrait recognition data is less than the quantity threshold of the portrait recognition data.

A second acquiring sub-module, configured to receive portrait recognition data transmitted by another terminal, and regard the received portrait recognition data as the portrait recognition parameter.

### Embodiment 3

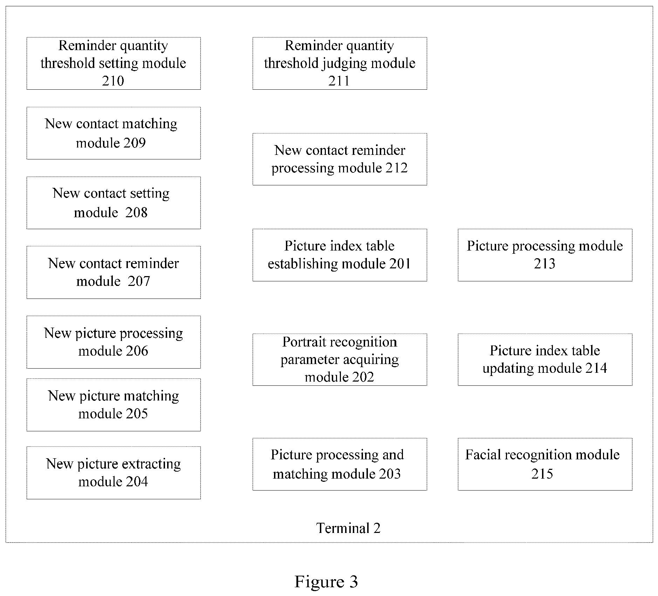

FIG. 3 is a schematic diagram of functional modules of a terminal provided by Embodiment 3 of the present invention. As shown in FIG. 3, in the present embodiment, the terminal provided by the present invention, based on the terminal 2 in FIG. 2, further includes one or more of the following functional modules.

A new picture extracting module 204, configured to extract all portrait recognition data from a new picture when the new picture is added to the picture database.

A new picture matching module 205, configured to compare portrait recognition parameters of each contact with all portrait recognition data of the new picture one by one.

A new picture processing module 206, configured to when any of the all portrait recognition data of the new picture matches the portrait recognition parameter, determine all portrait recognition parameters matching the portrait recognition data, and add picture information of the new picture to picture index tables of contacts corresponding to the all portrait recognition parameters.

Anew contact reminder module 207, configured to when the all portrait recognition data of the new picture do not match the portrait recognition parameter, prompt to establish a new contact.

A new contact setting module 208, configured to establish a picture index table for the new contact, and select one of the all portrait recognition data of the new picture according to the user operation as a portrait recognition parameter of the new contact.

A new contact matching module 209, configured to select pictures from a picture database sequentially, extract all portrait recognition data from the selected picture, compare the portrait recognition parameter of the new contact with the all portrait recognition data one by one, and when any of the all portrait recognition data matches the portrait recognition parameter, add picture information of the selected picture to the picture index table of the new contact.

A reminder quantity threshold setting module 210, configured to set a reminder quantity threshold.

A reminder quantity threshold judging module 211, configured to judge whether a data quantity of the all portrait recognition data in the new picture is greater than the reminder quantity threshold.

Anew contact reminder processing module 212, configured to prompt to establish a new contact when the data quantity of the all portrait recognition data of the new picture is less than the reminder quantity threshold.

A picture processing module 213, configured to add contact information of the contact to the selected picture after adding picture information of the selected picture to the picture index table.

A picture index table updating module 214, configured to when a picture in the picture database is deleted or moved, update the picture information of the picture, which is deleted or moved, into the picture index table of a corresponding contact according to the contact information of the picture which is deleted or moved.

A facial recognition module 215, configured to conduct portrait recognition on the picture, extract facial feature data from a part of a corresponding recognized face, and regard the facial feature data as the portrait recognition data.

In some embodiments, the terminal 2 related by the present invention may be a mobile device such as a mobile phone, a tablet, and also can be a fixed device built-in with a contact address book, such as, a computer, etc.

### Embodiment 4

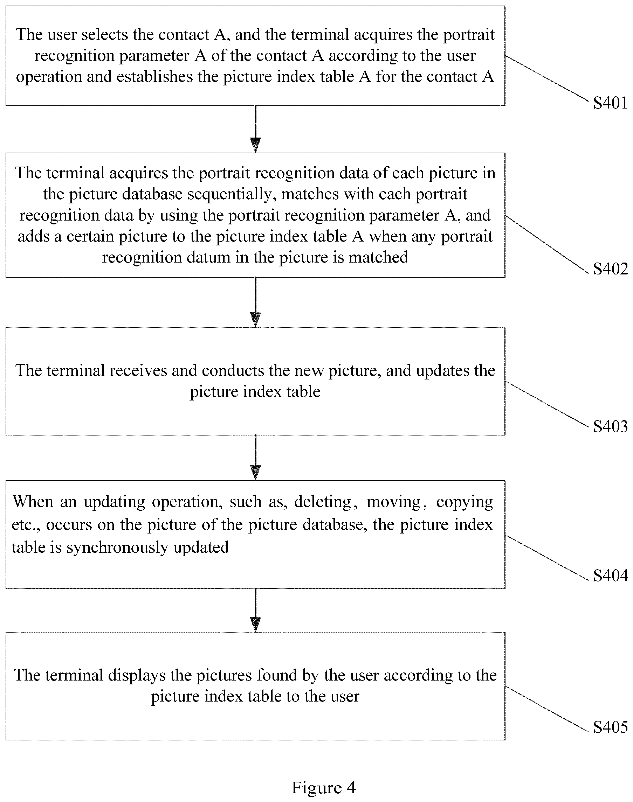

The main technical scheme of the present invention is illustrated by combining with a specific application example now. In the present application example, it is assumed that the terminal is a mobile phone, the picture database includes 3 folders (before April, April, and May) containing 100 pictures totally, where there are 15 pictures associated with contact A (denoted as picture 1, picture 2, ..., and picture 15), and the 15 pictures are stored in different folders and relate to the updating operation, such as, adding and deleting the pictures, and the portrait recognition data or parameter is the facial recognition data or parameter. FIG. 4 is a flow chart of the method for searching for pictures provided by the Embodiment 4 of the present invention. As shown in FIG. 4, in the present embodiment, the method for searching for pictures provided by the present invention includes the following steps.

In S401, the user selects the contact A, and the terminal acquires the portrait recognition parameter A of the contact A according to the user operation and establishes a picture index table A for the contact A.

The present embodiment is illustrated by taking the terminal only establishing the picture index table for one contract as an example. Predictably, in other embodiments, the present step can be repeated to achieve the objective of respectively establishing picture index tables for multiple contacts and respectively acquiring the portrait recognition parameter.

After the user selects the contact A, the terminal performs the processing, such as, the facial recognition, etc., to the pictures selected by the user according to the user operation, acquires the facial recognition parameter of the specified people in the picture specified by the user, and regards the facial recognition parameter as the portrait recognition parameter A of the contact, which may be compared with other pictures.

In S402, the terminal acquires the portrait recognition data of each picture in the picture database sequentially, compares each of the all portrait recognition data with the portrait recognition parameter A, and adds a certain picture to the picture index table when any portrait recognition datum of the certain picture matches the portrait recognition parameter A.

The terminal compares 100 pictures of the picture database with the portrait recognition parameter A. The face recognition is performed first for each picture, to judge whether there is any face in the picture. If there is no face in the picture, the picture is a scenic picture, and will not be processed. If there is a face in a picture, the picture may be a people picture and then the picture is processed with the face recognition, to judge whether any the facial parameter extracted from the picture matches the portrait recognition parameter A. When one of the facial parameters extracted from the picture matches the portrait recognition parameter A, the picture contains the image of the contact A, and the picture information of the picture is added to the index table A. When none of the facial parameters extracted from the picture matches the portrait recognition parameter A, the picture does not contain the image of the contact A and will not be processed.

It can be predicted that, if one picture contains more than one face (such as a group picture, etc.), the picture information of the picture can be added to the picture index tables of multiple contacts.

To undertake the assumption of the present embodiment, after the terminal executes the above steps, for example, the picture index table A includes the following picture information of 15 pictures: picture 1, located in folder "Before April"; picture 2, located in folder "April"; picture 3, located in folder "May", and so on.

In S403, the terminal receives and processes new picture 101, and updates the picture index tables.

The new picture 101 that the terminal receives can be either a newly shot picture or a picture transmitted by another terminal.

After receiving the new picture 101, the terminal performs the face recognition and facial recognition processing, to judge whether the new picture 101 contains the portrait recognition parameter A. When the new picture contains the portrait recognition parameter A, the placing location and name of the new picture 101 are added to the picture index table A. When the new picture 101 does not contain the portrait recognition parameter A and is a people picture, it is judged whether the new picture 101 meets the condition of newly establishing a contact, for example, it is judged whether the quantity of faces in the new picture 101 is larger than a preset threshold (the preset threshold can be set automatically or manually according to the shooting resolution of the terminal or the picture resolution, for example, the preset threshold is set to 2). When the face quantity is larger than the preset threshold (the facial feature parameter identified from the new picture is not very clear, and may not be used to recognize other pictures), no processing is further performed. When the face quantity is less than or equal to the preset threshold, the user is reminded to newly establish or associate a contact B for one or more facial features in the new picture 101, and the facial feature selected from the one or more facial features of the contact B by the user is regarded as the portrait recognition parameter of the contact B, and the picture index table B is newly established for the contact B. Further, the portrait recognition parameter B is compared with the pictures of the picture database, and the picture information of the pictures matching the portrait recognition parameter is added to the picture index table B.

Accordingly, when the user is reminded to newly establish or associate the contact B for one or more facial features of the new picture 101 respectively, the user can also select not to newly establish or associate the contact B, which mainly refers to the situations, such as, the street shooting, unfamiliar shooting objects, unfamiliar new pictures, etc.

In S404, when an updating operation, such as, deleting, moving, etc., occurs on the picture of the picture database, the picture index table is synchronously updated.

After picture information of a certain picture is added to a picture index table of the certain contact, the contact information of the corresponding contacts is added to the picture. For example, the contact information of the contact A is added to the picture 1, so that the terminal can know the correspondence between each picture of the picture database and each contact in the terminal.

On this basis, when an updating operation, such as, deleting, moving, copying, etc., occurs on the picture of the picture database, it is firstly judged whether the picture, occurred with the updating operation, contains contact information. When the picture contains contact information, it is determined that the picture is a picture of a certain contact, and the picture index table of the contact will be synchronously updated. When the picture does not contain contact information, then it is determined that the picture is not belonged to any contact, and no processing will be further made.

For example, the picture 1 is deleted, since the picture 1 contains the name of the contact A (the contact information), that is, the picture index table A will be updated, and the picture information related to the picture 1 in the picture index table A will be deleted. The updating operation, such as, moving and copying, is similar with the operation of deleting the picture; for example, when the picture 1 is moved or copied, the picture information of the picture 1 after moving or copying in the picture index table A will be modified.

Accordingly, when a picture contains information of a plurality of contacts, each of the picture index tables of the plurality of contacts will be processed.

In S405, the terminal displays the picture, which is found by the user according to the picture index table, to the user.

There are two ways of searching for the pictures by the user.

One is to search for the address book. The user selects the contact A, and the terminal finds the corresponding picture index table A, and displays the pictures 1 to 15 recorded in the picture index table A to the user through a small window or new window.

Two is to search for the picture database. The user selects the picture 1 or inputs the contact A, and the terminal finds the corresponding picture index table A, and displays the pictures 1 to 15 recorded in the picture index table A to the user through a small window or new window.

In summary, the implementation of the embodiments of the present invention may at least achieve the following advantages.

The terminal acquires the portrait recognition parameter of a certain contact and establishes a picture index table for the contact according to the user operation, that is, the terminal establishes a correlation between the portrait recognition parameter and the picture index table. Then the terminal compares the portrait recognition parameter of the contact with the picture database, and adds the picture information (for example, the picture information through which the picture can be found, may be a storage location or a name of the picture, etc.) of the pictures matching the portrait recognition parameter (all these pictures are clearly related to the contact) into the picture index table. Thus, the user does not need to view every picture in the picture database, and can quickly find the pictures associated with the contact according to the picture index table. The method can be simply performed, and can solve the existing problem of the multifarious operation of the picture searching technology and enhance the user experience.

The above are only specific embodiments of the present invention, not any form of limitation on the present invention. All simple modification, equivalent change, combination or modification to the above embodiments in any way based on the technical essence of the present invention are still within the protective scope of the technical scheme of the present invention.

### INDUSTRIAL PRACTICABILITY

As mentioned above, the method and terminal for matching pictures based on the address book provided by embodiments of the present invention may achieve the following beneficial effects: the user does not need to view every picture of the picture database and can quickly find all the pictures corresponding to the certain contact according to the picture index table when he or she wants to view pictures of that contact. Operation of the method is simple, the existing problem of the multifarious operation of searching for the pictures is thus solved, and the user experience is enhanced.

## Claims

1. A method for matching pictures based on an address book, comprising:
selecting or newly establishing a contact and establishing a picture index table for the contact;
acquiring a portrait recognition parameter of the contact; and
selecting pictures from a picture database sequentially, extracting all portrait recognition data from the selected picture, comparing the portrait recognition parameter with the all portrait recognition data of the selected picture one by one, and when any of the all portrait recognition data matches the portrait recognition parameter, adding picture information of the selected picture to the picture index table.

2. The method according to claim 1, wherein the step of acquiring the portrait recognition parameter of the contact comprises:
setting a quantity threshold of the portrait recognition data, selecting the picture according to a user operation, extracting the all portrait recognition data from the selected picture, and selecting one portrait recognition datum as the portrait recognition parameter according to the user operation when a quantity of the all extracted portrait recognition data is less than the quantity threshold of the portrait recognition data; or,
receiving portrait recognition data transmitted by another terminal, and regarding the received portrait recognition data as the portrait recognition parameter.

3. The method according to claim 1, further comprising:
extracting all portrait recognition data from a new picture when the new picture is added to the picture database;
comparing portrait recognition parameter of each contact with the all portrait recognition data of the new picture one by one; and
when any of the all portrait recognition data of the new picture matches the portrait recognition parameter, determining all portrait recognition parameters matching the portrait recognition data, and adding picture information of the new picture to picture index tables of contacts corresponding to the all portrait recognition parameters.

4. The method according to claim 3, further comprising:
when the all portrait recognition data of the new picture do not match the portrait recognition parameter, prompting to establish a new contact;
establishing a picture index table for the new contact, and selecting one of the all portrait recognition data of the new picture according to the user operation as a portrait recognition parameter of the new contact;
selecting pictures from the picture database sequentially and extracting all portrait recognition data from the selected picture; and comparing the portrait recognition parameter of the new contact with the all portrait recognition data one by one, and when any of the all portrait recognition data matches the portrait recognition parameter, adding picture information of the selected picture to the picture index table of the new contact.

5. The method according to claim 4, further comprising the following steps before prompting to establish the new contact,
setting a reminder quantity threshold;
judging whether a data quantity of all portrait recognition data in the new picture is greater than the reminder quantity threshold; and
prompting to establish the new contact when the data quantity of all portrait recognition data of the new picture is less than the reminder quantity threshold.

6. The method according to claim 1, further comprising the following steps after adding picture information of the selected picture to the picture index table,
adding contact information of the contact to the selected picture.

7. The method according to claim 6, further comprising:
when a picture in the picture database is deleted or moved, updating the picture information of the picture, which is deleted or moved, in the picture index table of a corresponding contact according to the contact information of the picture which is deleted or moved.

8. The method according to any one of claims 1 to 7, wherein the step of acquiring portrait recognition data from the picture comprises:
conducting portrait recognition on the picture, extracting facial feature data from a part of a corresponding recognized face, and regarding the facial feature data as the face recognition data.

9. A terminal, comprising:
a picture index table establishing module, configured to select or newly establish a contact, and establish a picture index table for the contact;
a portrait recognition parameter acquiring module, configured to acquire a portrait recognition parameter of the contact; and
a picture processing and matching module, configured to select pictures from a picture database sequentially, extract all portrait recognition data from the selected picture, compare the portrait recognition parameter with the all portrait recognition data one by one, and when any of the all portrait recognition data matches the portrait recognition parameter, add picture information of the selected picture to the picture index table.

10. The terminal according to claim 9, wherein the portrait recognition parameter acquiring module comprises:
a first acquiring sub-module, configured to set a quantity threshold of the portrait recognition data, select the picture according to a user operation, extract the all portrait recognition data from the selected picture, and select one portrait recognition datum as the portrait recognition parameter according to the user operation when a quantity of all extracted portrait recognition data is less than the quantity threshold of the portrait recognition data; and
a second acquiring sub-module, configured to receive portrait recognition data transmitted by another terminal, and regard the received portrait recognition data as the portrait recognition parameter.

11. The terminal according to claim 9, further comprising:
a new picture extracting module, configured to extract all portrait recognition data from a new picture when the new picture is added to the picture database;
a new picture matching module, configured to compare portrait recognition parameter of each contact with the all portrait recognition data of the new picture one by one; and
a new picture processing module, configured to when any of the all portrait recognition data of the new picture matches the portrait recognition parameter, determine all portrait recognition parameters matching the portrait recognition data, and add picture information of the new picture to picture index tables of contacts corresponding to the all portrait recognition parameters.

12. The terminal according to claim 11, further comprising:
a new contact reminder module, configured to when the all the portrait recognition data of the new picture do not match portrait recognition parameter, prompt to establish a new contact;
a new contact setting module, configured to establish a picture index table for the new contact, and select one of the all portrait recognition data of the new picture according to the user operation as a portrait recognition parameter of the new contact; and
a new contact matching module, configured to select pictures from a picture database sequentially, extract the all portrait recognition data from the selected picture, compare the portrait recognition parameter of the new contact with the all portrait recognition data one by one, and when any of the all portrait recognition data matches the portrait recognition parameter, add picture information of the selected picture to the picture index table of the new contact.

13. The terminal according to claim 12, further comprising:
a reminder quantity threshold setting module, configured to set a reminder quantity threshold;
a reminder quantity threshold judging module, configured to judge whether a data quantity of the all portrait recognition data in the new picture is greater than the reminder quantity threshold; and
a new contact reminder processing module, configured to prompt to establish the new contact when the data quantity of the all portrait recognition data of the new picture is less than the reminder quantity threshold.

14. The terminal according to claim 9, further comprising:
a picture processing module, configured to add contact information of the contact to the selected picture after adding picture information of the selected picture to the picture index table.

15. The terminal according to claim 14, further comprising:
a picture index table updating module, configured to when a picture in the picture database is deleted or moved, update the picture information of the picture, which is deleted or moved, into the picture index table of a corresponding contact according to the contact information of the picture which is deleted or moved.

16. The terminal according to any one of claims 9 to 15, further comprising:
a facial recognition module, configured to conduct portrait recognition on the picture, extract facial feature data from a part of a corresponding recognized face, and regard the facial feature data as the portrait recognition data.
